# EUROPEAN PATENT SPECIFICATION

(11) **EP 2 817 233 B1**
(45) Date of publication and mention of the grant of the patent: **20.12.2017**
(21) Application number: 13726262.2
(22) Date of filing: 22.02.2013
(51) Int. Cl.: B65D 6/00, B65B 25/02, B65D 21/02, B65D 85/50

(54) **STACKABLE CRATE FOR THE TRANSPORTATION OF LIVING PLANT MATERIAL.**
KISTEN ZUM TRANSPORT VON LEBENDEM PFLANZENMATERIAL
CAISSE À CLAIRE-VOIE EMPILABLES POUR LE TRANSPORT DE VÉGÉTAUX VIVANTS.

(30) Priority: 22.02.2012 US 201261601649 P
(43) Date of publication of application: 31.12.2014
(73) Proprietor: Syngenta Participations AG, 4058 Basel (CH)
(72) Inventor: ELAND, Leo, NL-2678 LV De Lier (NL); EBERHARDT, Ulrich, 56204 Hillscheid (DE); VAN MARREWIJK, Piet, NL-2628 AA Delft (NL); JOHNSEN, Lennart, NL-2678 LV De Lier (NL); EEK, Jan, NL-2628 AA Delft (NL); VAN DEN BERG, Bregtje, NL-2628 AA Delft (NL)
(74) Representative: Syngenta International AG
(86) International application number: PCT/IB2013/000665
(87) International publication number: WO 2013/124739

(56) References cited:
- DE-U- 7 440 185
- ES-U- 1 073 748
- NL-C1- 1 000 978
- US-A- 2 916 161
- US-A- 3 907 111
- US-A- 4 014 458
- US-A1- 2008 083 636

## Description

### TECHNICAL FIELD

The present disclosure relates to crates and systems for transporting living plant material, and methods of making and using crates and systems for transporting living plant material.

### BACKGROUND

Plant agriculture can generally be divided into three broad categories: (a) agronomy (i.e., herbaceous field crops grown on a large scale in cultivated fields); (b) forestry (i.e., forest trees and related products); and (c) horticulture (i.e., edible garden crops and plants for ornamental use). As with many other industries throughout the world, plant agriculture has evolved into a high specialized, commercial enterprise advanced by science and technology so as to efficiently and cost effectively deliver products in pace with the ever increasing demand of these products.

Arguably, in the past few decades, the fastest growing segment of plant agriculture as a whole is in the area of ornamental plants. Increased desire in using plants for interior decorating, emphasis on home and garden decoration and designing neighborhood and community land with aesthetically pleasing plants have all contributed to the demand for ornamental plants. This increased demand has generated a multi-billion dollar industry integrally supported by horticulturalists, botanists, geneticists, nurserymen, landscape architects, arborists, garden center operators, pest control specialists, and professional landscape services to name a few.

The increased demand for ornamental plants has fueled innovation in the horticultural industry for the mass propagation of elite, high yielding and disease free plants. Among such advancements is the method of young plant production. Mass production of young plants generally involves professional breeders and propagating companies that develop plant starting material, which it then ships or delivers to professional growers. The plant starting material is typically in the form of cuttings (rooted or unrooted), seedlings, or tissue-cultured propagules. Once delivered to the growers and/or plant raisers, the plant starting material is placed into propagation trays or liners where they are grown side by side in small cells in a propagation media that has been specifically developed to reduce weeds or diseases and provide a suitable environment to accommodate the plant at this fragile state of its life.

The trays or liners are then placed within a controlled environment, such as a greenhouse where the young plant begins to grow. State of the art greenhouses are equipped with computer-controlled system capable of monitoring the progress and quality of thousands of plant trays. Once the plant trays are ready to leave the green houses, they are transported to a professional grower who then removes the plant from its initial cell in the tray and into a larger container or field with the appropriate growing medium to sustain the growing plant.

When the young plant is ready to leave the greenhouse, it is still quite fragile and its transportation to the wholesalers who then distribute the product to the retailers. Alternatively, some retailers will import the young plants directly from the growers. Regardless of the selected links in this chain, it may be easily appreciated that some degree of care must be exercised in transporting these plants at such a vulnerable stage of their life while balancing the need to cost effectively transport these plants in mass quantities.

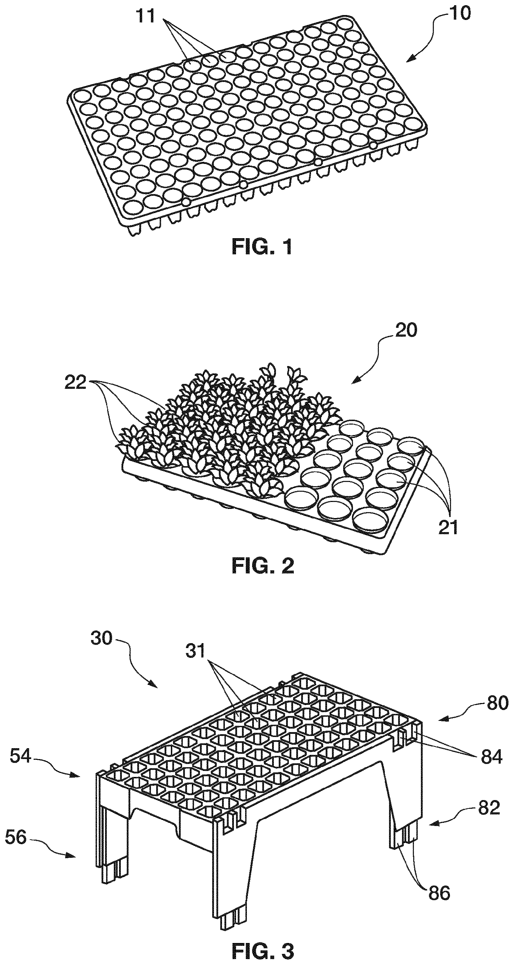

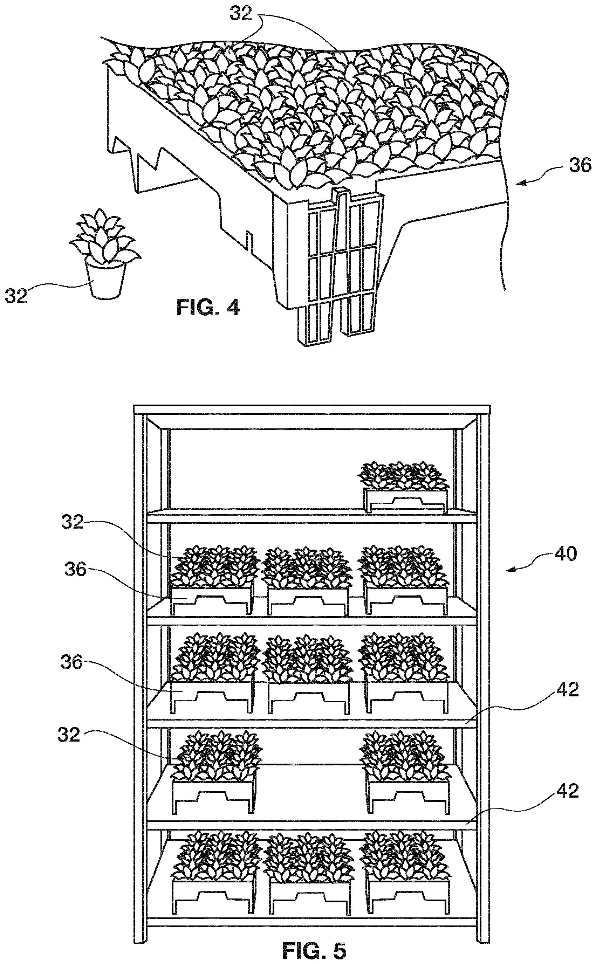

A common practice of transporting the trays is for the trays to leave the grower in movable carriers, or so-called "Danish trolleys". The trolleys are then rolled from place to place until the young plants reach their destination. On these trolleys, the trays are set upon an exposed shelving unit that generally lends itself to the displacement of the trays and subjects the young plants to damage or even loss. Further, the load capacity of these trolleys is very inefficient. Another common practice is to place the trays inside corrugated packaging solutions. However, the young plants need to be well ventilated and the boxes disrupt the view of the young plants for quality checks. Further, cardboard boxes generate waste and thus are not cost effective and take up humidity/water resulting in softer material and thus unstable for stacking one on top of another. US 2008/083636 discloses a stackable crate for transporting living plant material, according to the preamble of claim 1. With reference to FIG. **1** through FIG. **3****,** three types of propagation trays **10, 20,** and **30** are shown. These propagation trays **10, 20,** and **30** are known in the art. Each tray contains cells **11, 21,** and **31,** which are adapted to receive plant starting material (not shown). Once disposed therein, the plant starting material is provided with a suitable environment to permit growth of the material into young plants **22, 32,** shown for example in FIGS. **2** and **4****.** In commercial operations, the filled trays are placed in greenhouses where the plants can be grown in a controlled environment.

Once the young plants are mature enough, they are ready to be transplanted either in a field or another suitable container with the proper growth media to support the next stage of the plant's life. In commercial operations, for example, the filled propagation trays **36** are collected and loaded onto wheeled trolleys **40** such as the one shown in FIG. **5****.** The trolleys are then transported to professional growers.

As shown in FIG. **5****,** exemplary trolley **40** contains a vertical array of shelves **42** and filled trays **36** simply disposed thereon. Shelves **42** do not contain any sidewalls to offer protection for plants **32** during such a vulnerable stage in its life cycle.

While these common practices are currently acceptable, there is an increasing need felt for many years to develop a carrier and a carrier system that avoids these drawbacks, not only from a cost perspective, but simply to avoid loss of product to meet the ever increasing demands. Accordingly, there is a need for solutions to reduce or eliminate loss or injury of young plants and provide added security measures to protect the young plants while they are transported to their destination. There is also a need to provide a carrier and carrier system that enables the young plants to remain visible during transportation and delivery for quality control purposes. At the same time, it is also desirable to meet these needs without frustrating the carrier's ability to deliver mass quantities of young plants in a manner that is both time efficient and economically feasible.

### SUMMARY

The present invention is directed to a stackable crate according to claim 1. The present disclosure continues the effort to develop new systems for transporting living plant materials. Accordingly, the present disclosure is directed to stackable crates suitable for transporting one or more items (e.g., living plant material). In one exemplary embodiment, the stackable crate comprises a stackable crate having an interior volume for receiving at least one tray containing living young plant material, the crate comprising: a frame extending around the interior volume and having an upper frame portion along an upper boundary of the interior volume and a lower frame portion along a lower boundary of the interior volume; a plurality of spaced apart first connector elements located proximate to the lower frame portion; and a plurality of spaced apart second connector elements located proximate to the upper frame portion; wherein each one of the second connector elements is sized and adapted to engage with one of the first connector elements of a similarly constructed crate.

In another exemplary embodiment, the stackable crate comprises a stackable crate having an interior volume for receiving at least one tray containing living young plant material, the crate comprising: a frame extending around the interior volume and having an upper frame portion along an upper boundary of the interior volume and a lower frame portion along a lower boundary of the interior volume; a plurality of spaced apart first connector elements located proximate to the lower frame portion; a plurality of spaced apart second connector elements located proximate to the upper frame portion, wherein each one of the second connector elements is sized and adapted to engage with one of the first connector elements of a similarly constructed crate; and at least one movable door within at least one door opening positioned within at least one side wall of the frame, the at least one movable door being movable from a closed position that limits access to the interior volume to an open position that provides access to the interior volume.

The present disclosure is further directed to ensembles of stackable items including one or more of the herein-described stackable crates. In one exemplary embodiment, an ensemble of the present disclosure comprises an ensemble of stackable crates for transporting one or more items, such as young living plants, between a sender location and a recipient location, the ensemble comprising one or more stackable crates, such as those described herein, and at least one additional stackable item comprising (i) a stackable tray, and (ii) a stackable crate separator.

In another exemplary embodiment, the ensemble comprises an ensemble of stackable crates for transporting young living plants between a sender location and a recipient location, the ensemble comprising: a plurality of propagation trays containing a selected number of young plants; a plurality of crates each having an interior adapted to receive at least one of the propagation trays therein so as to define a filled crate, each of the crates being formed by a surrounding sidewall extending between an upper portion and a lower portion thereof and being stackable one on top of another as a stacked ensemble such that a bottom portion of an upper crate will nest with a top portion of a lower crate; and a plurality of support pallets, each support pallet adapted to support at least one stacked ensemble of filled crates placed thereon as a supported ensemble.

The present disclosure is even further directed to stackable crates or ensembles of stackable crates in combination with one or more living plant materials. The combination may further include one or more propagation trays, one or more stackable propagation trays, and one or more pallets.

The present disclosure is also directed to methods of transporting one or more items, such as living plant materials. In one exemplary embodiment, the method of transporting one or more items comprises a method of transporting one or more items to an intended recipient, wherein the method comprises transporting the one or more items within a stackable crate as described herein. In some embodiments, the one or more items comprise one or more living plant materials.

In another exemplary embodiment, the method of transporting one or more items comprises a method of transporting young plant material to an intended recipient, wherein the method comprises: providing a first stackable crate with a surrounding sidewall having an interior volume, the surrounding sidewall including first and second connectors; disposing young plant material in the interior volume to define a first filled crate; providing a second filled crate; and stacking the second filled crate on top of the first filled crate in a mated relationship.

These and other features and advantages of the present disclosure will become apparent after a review of the following detailed description of the disclosed embodiments and the appended claims.

### BRIEF DESCRIPTION OF THE DRAWINGS

The present disclosure is further described with reference to the appended figures showing exemplary embodiments, wherein:
FIG. **1** is a perspective view of a plant propagation tray as known in the art;
FIG. **2** is a perspective view of a plant propagation tray, also as known in the art, containing young plants therein;
FIG. **3** is a perspective view of yet another propagation tray as known in the art;
FIG. **4** is a perspective view of a filled propagation tray shown in FIG. 3 and showing an example of a young live plant disposed in one of the cells thereof;
FIG. **5** is a perspective view of a plurality of filled propagation trays disposed on a trolley for transportation;
FIG. **6** is a perspective view of a crate according to the present invention;
FIG. **7** is a perspective view showing the placement of a plant propagation tray into a crate of the present invention;
FIG. **8** is a partially exploded view of the propagation tray shown in FIG. **1** and a first stacked ensemble of crates and the propagation tray shown in FIG. **3****;**
FIG. **9** is a perspective view of an alternative stacked ensemble of crates;
FIG. **10** is a perspective view of yet another ensemble of stacked crates and propagation trays;
FIG. **11** is a perspective view of two crates having an alternative construction according to the present invention;
FIG. **12** is a perspective view of the two crates shown in FIG. **11** stacked one on top of the other;
FIG. **13** is a perspective view of another crate according to the present invention with a removable door removed from the crate;
FIG. **14** is a perspective view of the crate shown in FIG. **13** with a removable door attached to the crate and in an open position;
FIG. **15** is a perspective view of the crate shown in FIG. **13** with a removable door attached to the crate and in a closed position;
FIG. **16** is a perspective view of an ensemble of stackable crates with each crate being the crate shown in FIG. **15****;**
FIG. **17** is a close-up view of the ensemble of stackable crates shown in FIG. **15** during a door removal step;
FIG. **18** is a close-up view of a flap portion of the removable door shown in FIG. **17****;**
FIGS. **19A-19B** provide frontal views of exemplary door openings and removable doors for use in stackable crates; and
FIG. **20** is a perspective view of an ensemble of stackable crates comprising multiple stackable crates shown in FIG. **13****.**

### DETAILED DESCRIPTION

According to the present disclosure, a stackable crate is provided that is adapted to receive selected items for transportation from a sender location to a recipient location. The crate is particularly useful for receiving at least one propagation tray of young plant material and is stackable such that multiple filled crates can be palletized to transport large quantities of the young plants in a protected environment.

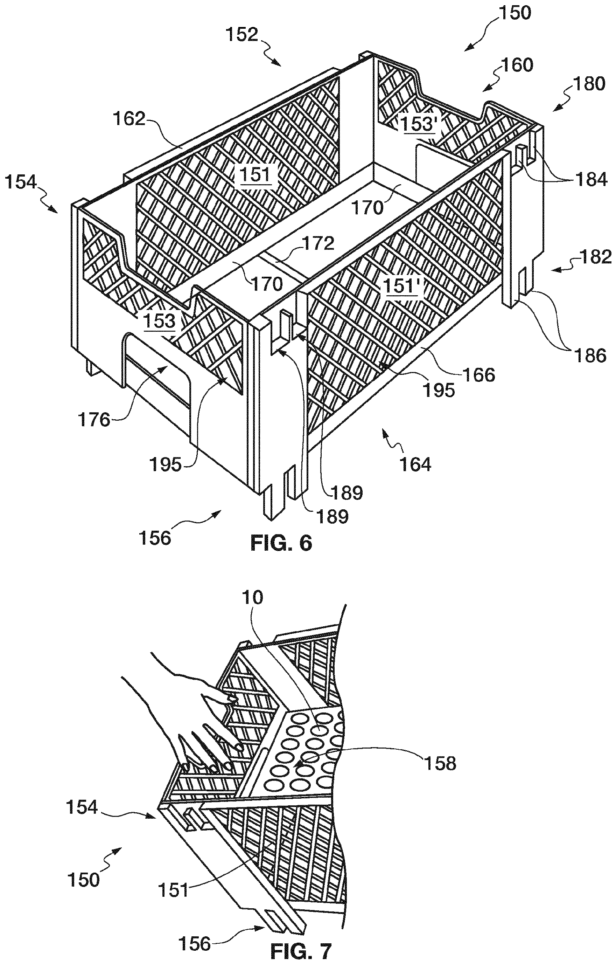

With reference now to FIG. **6****,** the present disclosure is directed at providing crates to house the propagation trays in an environment constructed to reduce risk of injury to the young plant during shipment. As shown, crate **150** is generally in the shape of a rectangular frame **152** having first and second sidewalls **151** and **151'** and first and second end walls **153** and **153'**. Frame **152** generally extends between an upper frame portion **154** and a lower frame portion **156** thereby to define an interior volume **158** for receiving the young plants therein. More particularly, crate **150** may be used to receive plant propagation tray **10,** such as that shown and described with respect to FIG. **1****,** thereby to define a filled crate once the young plant material is disposed therein. As should be appreciated, crate **150** may be used to receive other known propagation trays, such as tray **20** shown in FIG. **2****,** or may simply receive a selected number of potted plants.

Crate **150** having the features describe above may be constructed as a unitary one-piece construction. Frame **152** may further be provided with any desired pattern of apertures **174,** preferably sufficient to permit the ventilation of the young plants therein during shipment and proper visibility of the same with sufficient dimensions suitable for protecting the young plants. Further, crates **150** may be formed of any suitable material that will safely transport the young live plants during the normal rigors of transportation. Such material includes, but is in no way limited to polypropylene, wood, and corrugated material.

With continued reference to FIG. **6****,** frame **152** has a generally open top area **160** and open bottom area **164** each surrounded by a respective top and bottom edge **162** and **166.** To accommodate support of the propagation tray therein, crate **150** may further be provided with flange **170,** located proximate to lower frame portion **156** and extending laterally inwardly to receive and support tray **10** thereon. For additional support of the tray, cross-beam **172** may be provided to extend across the open bottom area between selected walls of the frame. As shown here as an example, cross-beam **172** is centrally located and extends across the open bottom area **164** between sidewalls **151** and **151'** of frame **152.**

In addition, frame **152** may be provided with at least one passageway **176** formed therethrough and in communication with the interior. As shown in FIG. 7, passageway **176** may assist with the placement of the tray into or removal from the interior of the crate. As shown here, passageway **176** is configured to permit ingress and egress by a person's hand, but the passageway is not limited to this configuration. For example, the passageway could be configured as an elongate channel or slot sized to permit ingress or egress of at least one finger.

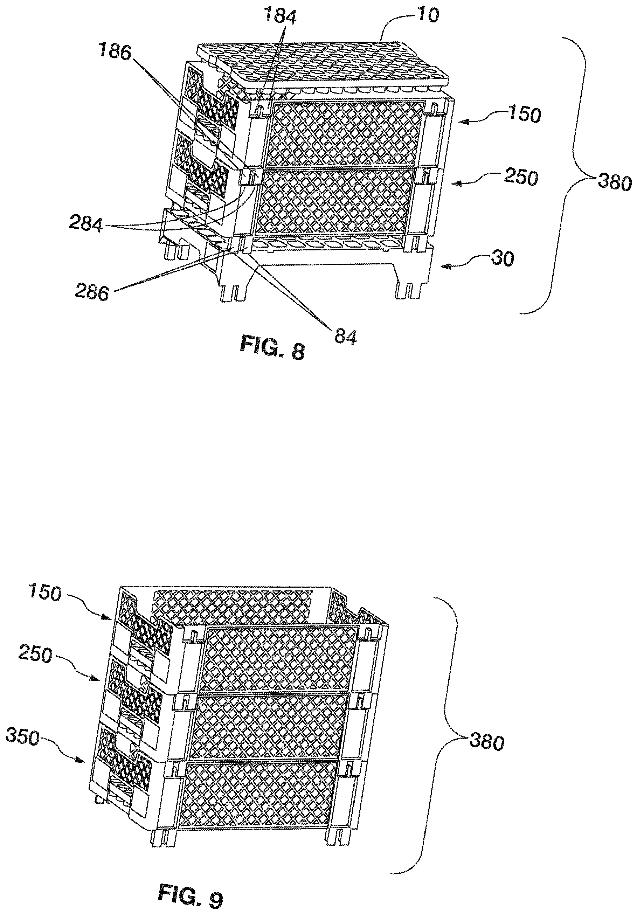

With continued reference to FIG. **6** and additional reference to FIGS. **8** and **9****,** crate **150** is constructed to be stackable, one on top of another, with either a crate of similar construction **150** or with propagation tray **30,** shown in FIG. **3****,** as a stacked ensemble. To accommodate this feature, crate **150** is provided with first and second connectors **180** and **182** that are matable with a second crate of similar construction. First connectors **180** are generally shown here as a pair of recesses **184** formed in frame **152** at a location proximate to upper frame portion **154.** Recesses **184** are adapted to receive and mate with second connector element **182,** which extends downwardly from frame **152** at a location proximate to lower frame portion **156** to terminate in a pair of connecting feet **186.** Preferably, first and second connector elements **180** and **182** are located at each of the four corners of rectangular crate **150.**

Similarly, and with reference to FIG. **3****,** propagation tray **30** is provided with a plurality of first connectors **80** located proximate to a top portion **54** thereof and second connectors **82** located proximate to a bottom portion **86** thereof. Second connectors extend downwardly to terminate into a pair of connecting feet **86** that are adapted to be received and mated with one pair of recesses **84** of a similarly constructed tray. Of course, as should be appreciated, the construction of first and second connectors need not be limited to configuration of recess and feet, but have been done in this manner primarily to accommodate tray **30,** which is known and in current use in commercial operations for the transportation of young plants. Accordingly, crates may be configured with alternate matable connectors to permit stacking of the crates in a suitable manner.

As shown in FIG. **8****,** upper crate **150** is stacked on top of and supported by lower crate **250** and lower crate **250** is stacked on top of tray **30** such that tray **30** supports both crates **150** and **250** as an ensemble of stackable crates. Further, feet **186** of upper crate **150** are received by recesses **284** of lower crate **250.** Similarly feet **286** of crate **250** are received by recesses **84** of propagation tray **30.** Recesses **184** of the upper crate **150** remain available to receive the feet of an additional crate or propagation tray if desired. As may be appreciated, the young plants that would be nested within the cells of the propagation trays would be surrounded and protected by the respective sidewalls of crates **150** and **250.**

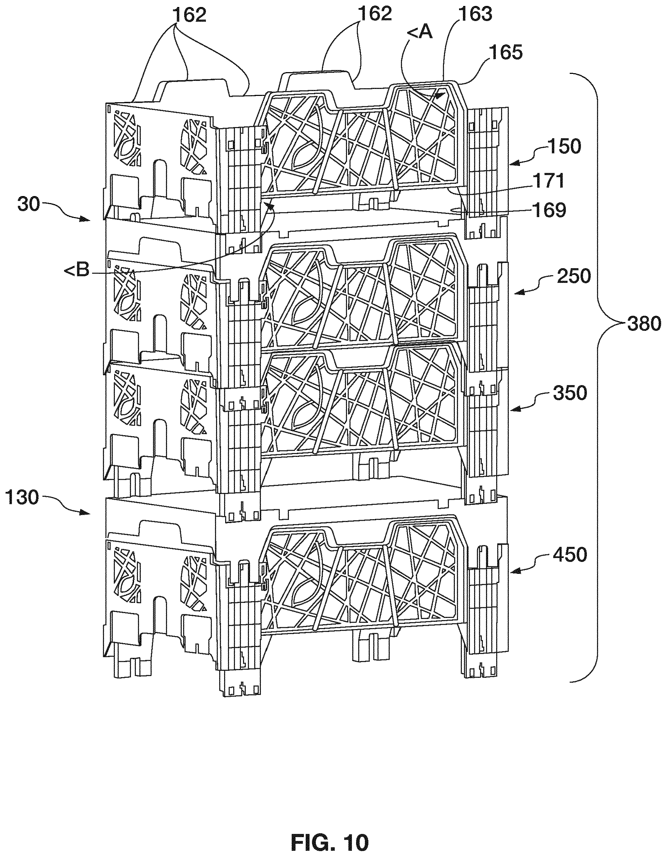

FIGS. **9** and **10** show alternate ensembles of stacked crates and trays. FIG. **9** shows stacked crates **150, 250** and **350,** each with a propagation tray **10** disposed therein. As should be appreciated from the description above, top crate **150** is ready and able to receive another crate or propagation tray **30** thereabove. Similarly, all crates **150, 250** and **350** could be supported below by an additional crate or propagation tray **30.** FIG. **10** shows a stacked ensemble of crates **150, 250** and **350,** and **450** with trays **30** and **130.** As desired, a selected ensemble of crates or crates and trays, may be palletized to ship mass quantities of young plants to a desired location.

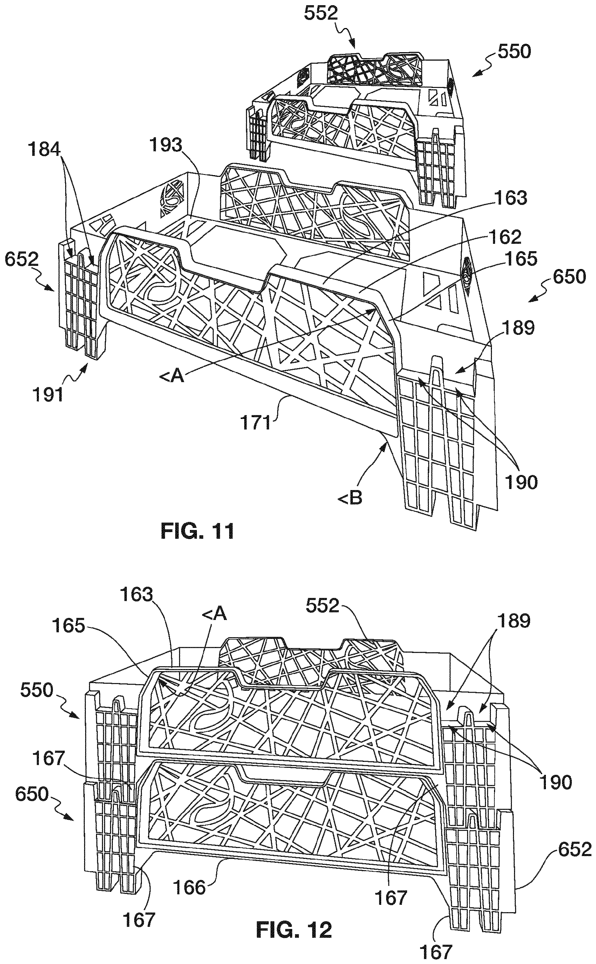

Alternate constructions of the crates are also contemplated, examples of which are shown in FIGS. **11** and **12****.** As shown, crates **550** and **650** are similar in design and stackable by means of matable connectors as described in some detail in reference to FIGS. **6****,** **8,** and **9****.** Here, crates **550** and **650** include alternative frame constructions **552** and **652** for ventilation and visibility of the young plants to be disposed in the respective interior thereof and for alternative aesthetic appearance.

Finally, a method of transporting young plant material to an intended recipient is provided. The method includes providing a desired number of crates that contain therein a plant propagation tray of young living plants wherein the crates include matable connectors whereby an upper filled crate is mated to and supported by a lower filled crate to define a stacked ensemble. Further, suitable propagation trays that include matable connectors can also be used to support or be supported by these filled crates to define a stacked ensemble. A suitable number of stacked ensembles may then be palletized for transportation of the young plants to a desired location.

### Other Embodiments:

### Stackable Crate Embodiments:

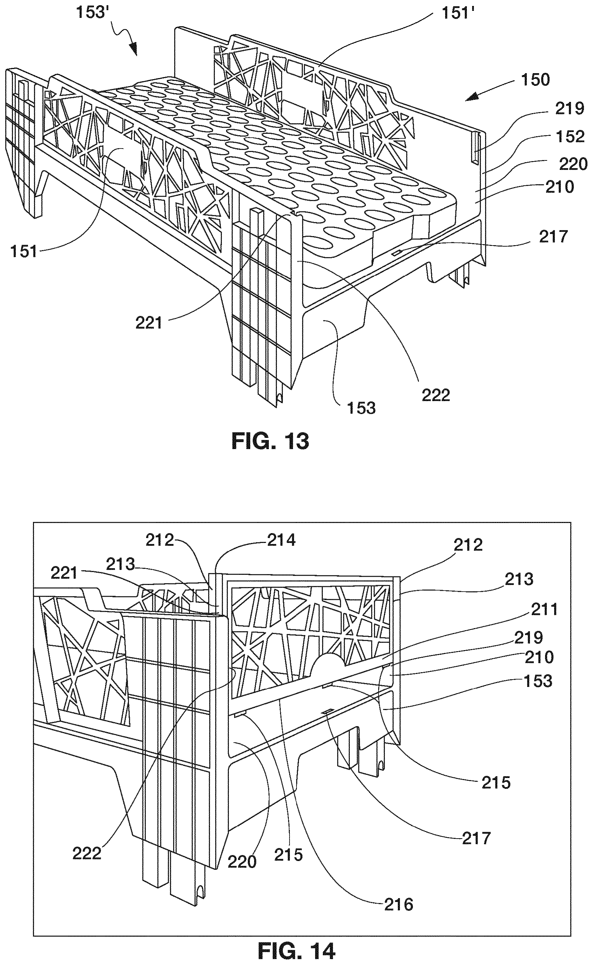

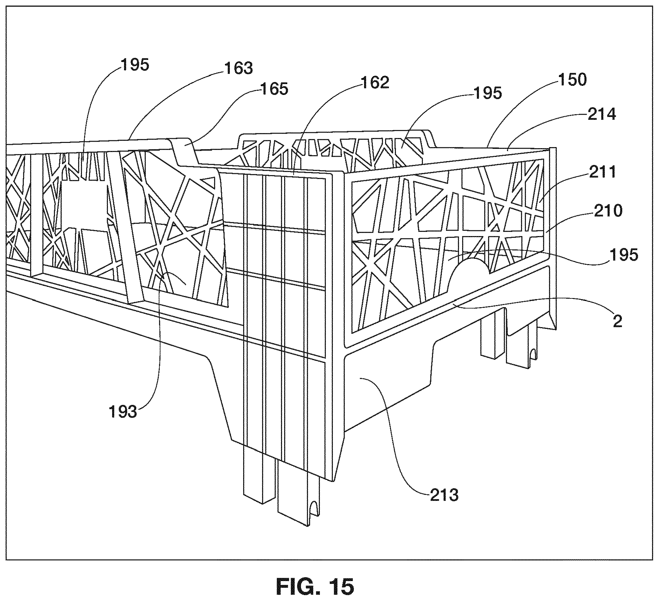

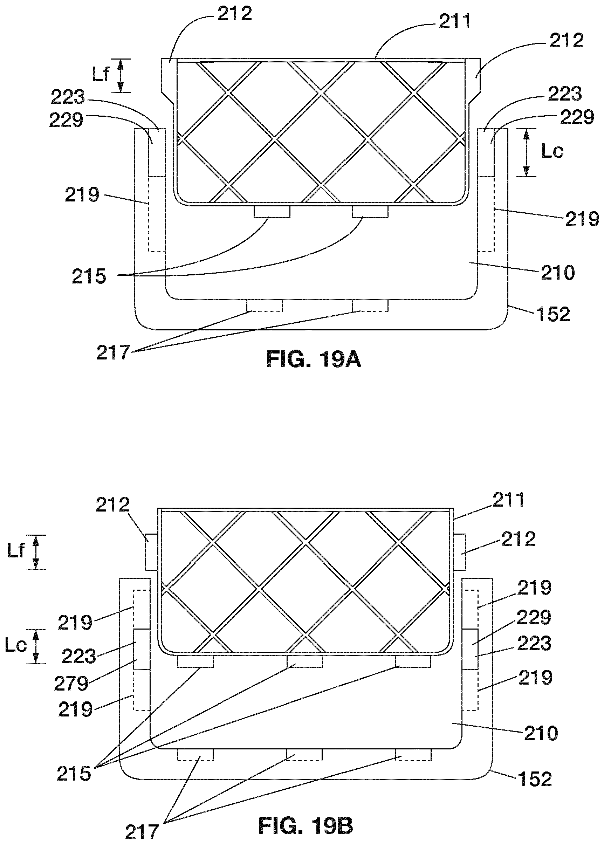

1. A stackable crate **150** having an interior volume **158** for receiving at least one tray (e.g., propagation tray **10**) containing living young plant material (or some other item), said crate **150** comprising: a frame **152** extending around the interior volume **158** and having an upper frame portion **154** along an upper boundary of said interior volume **158** and a lower frame portion **156** along a lower boundary of said interior volume **158;** a plurality of spaced apart first connector elements **182** located proximate to the lower frame portion **156;** and a plurality of spaced apart second connector elements **180** located proximate to the upper frame portion **154;** wherein each one of said second connector elements **180** is sized and adapted to engage with one of said first connector elements **182** of a similarly constructed crate **150.**
2. A stackable crate **150** according to embodiment 1, wherein said frame **152** comprises at least one side wall **151** (i) extending upward from said lower frame portion **156** to said upper frame portion **154,** and (ii) surrounding said interior volume **158.**
3. A stackable crate **150** according to embodiment 2, wherein said at least one side wall **151** comprises (i) two opposing side walls **151/151'** on either side of said interior volume **158,** and (ii) two end walls **153/153'** on either end of said interior volume **158.**
4. A stackable crate **150** according to any one of embodiments 1 to 3, wherein said plurality of spaced apart first connector elements **182** comprises two or more first connector elements **182,** and said plurality of spaced apart second connector elements **180** comprises two or more second connector elements **180.**
5. A stackable crate **150** according to any one of embodiments 1 to 4, wherein said plurality of spaced apart first connector elements **182** comprises three or more first connector elements **182,** and said plurality of spaced apart second connector elements **180** comprises three or more second connector elements **180.**
6. A stackable crate **150** according to any one of embodiments 1 to 5, further comprising: four first connector elements **182** each located proximate to a respective corner of said frame **152** and extending downwardly from said lower frame portion **156** to terminate in a pair of connecting feet **186;** and four second connector elements **180** each located proximate to a respective corner of said frame **152** and formed in the upper frame portion **154,** each second connector element **180** comprising a pair of receiving recesses **184** sized and adapted to receive a pair of said connecting feet **186** of a similarly constructed crate **150** in a nested state such that the upper crate **150** is supported by the lower crate **150.**
7. A stackable crate **150** according to embodiment 6, wherein each receiving recess **184** comprises (i) three recess side wall surfaces **189** and (ii) a recess bottom surface **190** sized and shaped so as to receive a connecting foot **186** comprising (i) three matching foot side wall surfaces **191** and (ii) a matching foot bottom surface **192.**
8. A stackable crate **150** according to any one of embodiments 1 to 7, wherein said frame **152** comprises a flange **170** extending around at least a portion of the interior volume **158** of the crate **150** at a location proximate to the lower frame portion **156** and adapted to support a propagation tray thereon (e.g., propagation tray **10** shown in FIG. **7**).
9. A stackable crate **150** according to any one of embodiments 1 to 8, wherein said frame **152** comprises a flange **170** extending around the interior volume **158** of the crate **150** at a location proximate to the lower frame portion **156** and adapted to support a propagation tray thereon (e.g., propagation tray **10** shown in FIG. **7**).
10. A stackable crate **150** according to embodiment 8 or 9, wherein said flange **170** is sized so that a propagation tray placed thereon (e.g., propagation tray **10** shown in FIG. **7**) rests along said flange **170** with a portion of the propagation tray extending below said flange **170.**
11. A stackable crate **150** according to any one of embodiments 1 to 8 and 10, wherein a portion of said frame **152** comprises a bottom wall **193** extending along the interior volume **158** of the crate **150** at a location proximate to the lower frame portion **156** and adapted to support a propagation tray thereon (e.g., propagation tray **10** shown in FIG. **7**).
12. A stackable crate **150** according to embodiment 11, wherein said bottom wall **193** is sized so that a propagation tray placed thereon (e.g., propagation tray **10** shown in FIG. **7**) rests along said bottom wall **193** with all of the propagation tray being above said bottom wall **193.**
13. A stackable crate **150** according to any one of embodiments 1 to 12, said frame **152** further comprising a centrally located cross-beam **172** extending between two opposing side wall portions **151** of said frame **152.**
14. A stackable crate **150** according to any one of embodiments 1 to 13, wherein said frame **152** comprises a pair of opposing end walls **153/153'** wherein at least one of said end walls **153/153'** comprises a wall passageway **176** formed therethrough so as to be in communication with the interior volume **158.**
15. A stackable crate **150** according to any one of embodiments 1 to 14, wherein said frame **152** comprises a pair of opposing end walls **153/153'** wherein at least one of said end walls **153/153'** comprises a wall passageway **176** formed therethrough so as to be in communication with the interior volume **158,** said wall passageway **176** being sized and adapted to facilitate placement and removal of at least a portion of a user's hand (not shown) therethrough.
16. A stackable crate **150** according to any one of embodiments 1 to 15, wherein said frame **152** comprises a pair of opposing end walls **153/153'** wherein at least one of said end walls **153/153'** comprises a wall passageway **176** formed therethrough so as to be in communication with the interior volume **158,** said wall passageway **176** being sized and adapted to facilitate placement and removal of a propagation tray (e.g., propagation tray **10** shown in FIG. 7) within said interior volume **158.**
17. A stackable crate **150** according to any one of embodiments 1 to 16, wherein said frame **152** comprises an upper rim **162** extending along said upper frame portion **154,** and at least a portion of said upper rim **162** extends above uppermost recess wall portions **189** of said recesses **184.** See, for example, exemplary stackable crate **150** shown in FIGS. **11-12****.**
18. A stackable crate **150** according to any one of embodiments 1 to 17, wherein said frame **152** comprises an upper rim **162** extending along said upper frame portion **154,** and at least a portion of said upper rim **162** extends (i) above uppermost recess wall portions **189** of said recesses **184,** and (ii) along opposing side walls **151/151'** of said frame **152.** See, for example, exemplary stackable crate **150** shown in FIGS. **11-12****.**
19. A stackable crate **150** according to embodiment 17 or 18, wherein said portion of said upper rim **162** comprises a first upper rim portion **163** and a second upper rim portion **165,** said first and second upper rim portions **163/165** forming a first angle **A** therebetween.
20. A stackable crate **150** according to any one of embodiments 17 to 19, wherein said portion of said upper rim **162** extends (i) along opposing side walls **151/151'** of said frame **152,** and (ii) above opposing end walls **153/153'** of said frame **152.** See, for example, exemplary stackable crate **150** shown in FIGS. **11-12****.**
21. A stackable crate **150** according to any one of embodiments 1 to 20, wherein said frame **152** comprises a lower rim **166** extending along said lower frame portion **156,** at least a portion of which extends below (a) a lowermost portion of a flange **170** positioned along a lower portion of said interior volume **158,** (b) a lowermost bottom wall portion of a bottom wall **193** positioned along a lower portion of said interior volume **158,** or (c) both (a) and (b). See, for example, exemplary stackable crate **150** shown in FIGS. **11-12****.**
22. A stackable crate **150** according to any one of embodiments 1 to 21, wherein said frame **152** comprises a lower rim **166** (i) extending along said lower frame portion **156,** and at least a portion **167** of said lower rim **166** extends below (a) a lowermost portion of a flange **170** positioned along a lower portion of said interior volume **158,** (b) a lowermost bottom wall portion of a bottom wall **193** positioned along a lower portion of said interior volume **158,** or (c) both (a) and (b), and (ii) along opposing side wall extensions **1511** of said frame **152.** See, for example, exemplary stackable crate **150** shown in FIGS. **11-12****.**
23. A stackable crate **150** according to embodiment 21 or 22, wherein said lower rim **166** comprises a first lower rim portion **171** and a second lower rim portion **169,** said first and second lower rim portions **171/169** forming a second angle **B** therebetween. See, for example, angle B shown in FIG. **11****.**
24. A stackable crate **150** according to any one of embodiments 19 to 23, wherein each angle (i.e., **A** and **B**) ranges between about 90° to less than 180° (or an angle value or range of angle values between 90° and 180°, in increments of 1°, for example the angle value of 135° or the angle range of from about 120° to about 150°).
25. A stackable crate **150** according to any one of embodiments 1 to 24, wherein said frame **152** includes a plurality of apertures **195** formed therethrough sufficient to ventilate living plant material (not shown) positioned within said interior volume **158.**
26. A stackable crate **150** according to embodiment 25, wherein said plurality of apertures **195** are present within (i) one or more side walls **151/151'** (or **153/153'**), (ii) a bottom wall **193,** or both (i) and (ii) of said frame **152.**
27. A stackable crate **150** according to any one of embodiments 1 to 26, wherein said frame **152** is sized and adapted to enclose living plant material (not shown) positioned within said interior volume **158** so as to protect the plant material during transportation.
28. A stackable crate **150** according to any one of embodiments 1 to 27 that is reusable.
29. A stackable crate **150** according to any one of embodiments 1 to 28 that is formed as a unitary construction.
30. A stackable crate **150** according to any one of embodiments 1 to 29, wherein said frame **152** is substantially rectangular and surrounds a rectangular-shaped interior volume **158.** It should be noted that stackable crate **150** may have any desired shaped frame **152** and corresponding shaped interior volume **158.** Suitable shapes for frame **152** and corresponding shaped interior volume **158** include, but are not limited to, a circular shape, a triangular shape, a square shape, a star shape, an oval shape, a hexagonal shape, or any other shape having at least one side wall **151/151'** (or **153/153'**).
31. A stackable crate **150** according to any one of embodiments 1 to 30, wherein said frame **152** further comprises at least one movable door **211** within at least one door opening **210** positioned within at least one side wall **151/151'/153/153'** of said frame **152,** said at least one movable door **211** being movable from a closed position that limits access to said interior volume **158** to an open position that provides access to said interior volume **158.**
32. A stackable crate **150** according to any one of embodiments 1 to 31, wherein said frame **152** further comprises a movable door **211** within at least one door opening **210** positioned within at least one end wall **153/153'** of said frame **152,** said movable door **211** being movable from a closed position that limits access to said interior volume **158** (e.g., as shown in FIG. **15**) to an open position that provides access to said interior volume **158** (e.g., as shown in FIG. **14**).
33. A stackable crate **150** according to embodiment 31 or 32, wherein each movable door **211** is sized so as to have a door area that represent less than a side wall area of said frame **152.** See, for example, exemplary movable door **211** with a door area that represents less than a side wall area of end wall **153** of frame **152** in FIG. **14****.**
34. A stackable crate **150** according to any one of embodiments 31 to 33, wherein each movable door **211** comprises opposing flap portions **212** extending outward from and along opposite side edges **213** of said movable door **211.**
35. A stackable crate **150** according to embodiment 34, wherein each of said opposing flap portions **212** extends from an upper edge **214** of said movable door **211** along a side edge **213** of said movable door **211.**
36. A stackable crate **150** according to embodiment 34 or 35, wherein each of said opposing flap portions **212** extends from an upper edge **214** of said movable door **211** along a side edge **213** of said movable door **211,** but less than a complete length of said side edge **213** of said movable door **211.**
37. A stackable crate **150** according to any one of embodiments 34 to 36, wherein each of said opposing flap portions **212** extends a distance of from about 10 millimeters (mm) to about 500 mm (or any distance or range of distances between 10 mm and 500 mm, in increments of 0.1 mm; for example, a distance of 50 mm, or a distance range of from about 70 mm to about 300 mm).
38. A stackable crate **150** according to any one of embodiments 31 to 37, wherein each movable door **211** comprises door engaging members **215** extending outward from and along a bottom edge **216** of said movable door **211.** See, for example, exemplary door engaging members **215** shown in FIG. **14****.**
39. A stackable crate **150** according to any one of embodiments 31 to 38, wherein each door opening **210** comprises door opening engaging slots **219** extending inward and along opposing side edges **220** of said door opening **210,** said door opening engaging slots **219** being sized to accept engagement with flap portions **212** of said movable door **211.**
40. A stackable crate **150** according to embodiment 39, wherein each of said door opening engaging slots **219** extends from an upper edge **221** of said door opening **210** and along a side edge **222** of said door opening **210.**
41. A stackable crate **150** according to embodiment 39 or 40, wherein each of said door opening engaging slots **219** extends from an upper edge **221** of said door opening **210** and along a side edge **222** of said door opening **210,** but less than a complete length of said side edge **222** of said door opening **210.**
42. A stackable crate **150** according to any one of embodiments 39 to 40, wherein each of said door opening engaging slots **219** extends a distance of from about 10 millimeters (mm) to about 500 mm (or any distance or range of distances between 10 mm and 500 mm, in increments of 0.1 mm; for example, a distance of 50 mm, or a distance range of from about 70 mm to about 300 mm).
43. A stackable crate **150** according to any one of embodiments 39 to 42, wherein said frame **152** further comprises opposing cut-out sections **223** positioned along each door opening **210** so as to expose opposing portions **229** of said door opening engaging slots **219,** said opposing cut-out sections **223** assisting in removal of a removable door **211** from said stackable crate **150** when another similarly stackable crate **150** is positioned on said stackable crate **150.**
44. A stackable crate **150** according to embodiment 43, wherein each of said opposing cut-out sections **223** extends from an upper edge **221** of said door opening **210** and along a side edge **222** of said door opening **210.**
45. A stackable crate **150** according to embodiment 43 or 44, wherein each of said opposing cut-out sections **223** extends a distance (i.e., a cut-out section length, **L_{c}**, as shown in FIGS. **19A-****19B**) of from about 5.0 mm to about 100 mm (or any distance or range of distances between 5.0 mm and 100 mm, in increments of 0.1 mm; for example, a distance of 7.2 mm, or a distance range of from about 7.8 mm to about 49.6 mm).
46. A stackable crate **150** according to any one of embodiments 43 to 45, wherein each of said opposing cut-out sections **223** extends a distance that is about equal to or greater than a flap portion length, **L_{f}**, of each flap portion **219** positioned along said movable door **211.** See, flap portion length, **L_{f}** shown in FIGS. **19A-19B****.**
47. A stackable crate **150** according to any one of embodiments 43 to 46, wherein each of said opposing cut-out sections **223** extends a distance (i.e., a cut-out section length, **L_{c},** as shown in FIGS. **19A-19B**) that is greater than a flap portion length, **L_{f},** of each flap portion **219** positioned along said movable door **211.**
48. A stackable crate **150** according to any one of embodiments 31 to 47, wherein each door opening **210** comprises holes **217** positioned within a lower edge portion **216** of said door opening **210,** said holes **217** being sized to accept engagement with one or more door engaging members **215** along said movable door **211.**
49. A stackable crate **150** according to any one of embodiments 31 to 48, wherein each movable door **211** is removable from said frame **152.**
50. A stackable crate **150** according to any one of embodiments 31 to 49, wherein each movable door **211** is removable from said frame **152** when said stackable crate **150** has another similarly stackable crate **150** or stackable tray **270** stacked thereon.
51. A stackable crate **150** according to any one of embodiments 1 to 50, further comprising a propagation tray **10** disposed in the interior volume **158** of the crate **150.**

### Ensembles of One or More Stackable Crates:

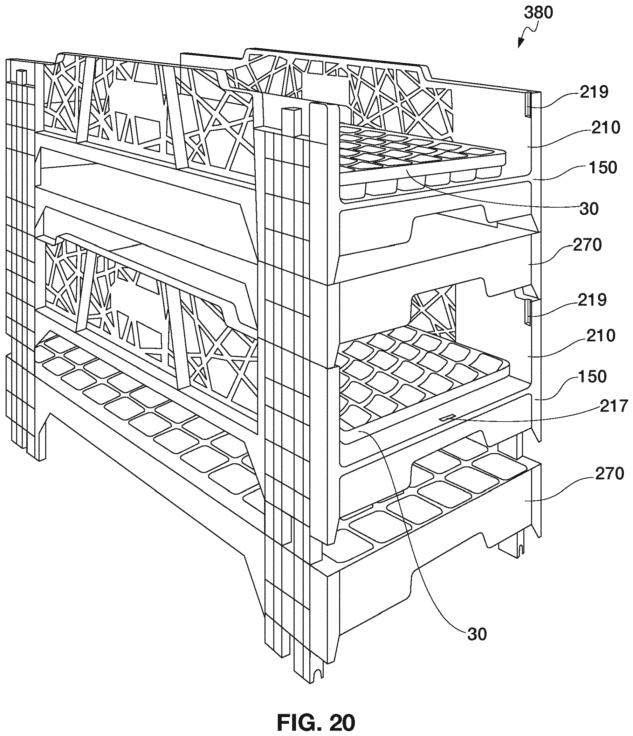

52. An ensemble **380** of stackable crates **150** for transporting young living plants (not shown) between a sender location and a recipient location, said ensemble **380** comprising two or more stackable crates **150** according to any one of embodiments 1 to 51.
53. An ensemble **380** of stackable crates **150** for transporting young living plants (not shown) between a sender location and a recipient location, said ensemble **380** comprising one or more stackable crates **150** according to any one of embodiments 1 to 51, and at least one additional stackable item comprising (i) a stackable tray **270,** and (ii) a stackable crate separator **270.** See, for example, exemplary ensemble **380** of stackable items in FIG. **20****.**
54. An ensemble **380** of stackable crates **150** for transporting young living plants (not shown) between a sender location and a recipient location, comprising: a plurality of propagation trays **10** containing a selected number of young plants (not shown); a plurality of crates **150** each having an interior volume **158** adapted to receive at least one of said propagation trays **10** therein so as to define a filled crate **150,** each of said crates **150** being formed by a surrounding sidewall **151** (and/or **153**) extending between an upper portion **154** and a lower portion **156** thereof and being stackable one on top of another as a stacked ensemble **380** such that a bottom portion **156** of an upper crate **150** will nest with a top portion **154** of a lower crate **150;** a plurality of support pallets (not shown), each said support pallet adapted to support at least one stacked ensemble **380** of filled crates **150** placed thereon as a supported ensemble **380.**
55. The ensemble **380** of embodiment 54, wherein at least one crate **150** within said plurality of crates **150** comprises the crate **150** of any one of embodiments 1 to 51.
56. The ensemble **380** of embodiment 54 or 55, wherein two or more crates **150** within said plurality of crates **150** each comprise the crate **150** of any one of embodiments 1 to 51.
57. The ensemble **380** of stackable crates **150** according to any one of embodiments 52 to 56, further comprising a stackable propagation tray **270** containing living young plants (not shown) having a top tray portion and a bottom tray portion and being stackable along with said stackable crates **150** such that (1) the bottom tray portion is adapted to be received on top of a stackable crate **150;** and (2) the top tray portion is adapted to receive and support a stackable crate **150** thereabove.

### Methods of Transporting One or More Items:

58. A method of transporting one or more items to an intended recipient, said method comprising: transporting the one or more items within a stackable crate **150** according to any one of embodiments 1 to 51, or an ensemble **380** of stackable crates **150** according to any one of embodiments 52 to 57.
59. The method of embodiment 58, wherein the one or more items comprise one or more living plant materials.
60. A method of transporting young plant material to an intended recipient, said method comprising: providing a first stackable crate **150** with a surrounding sidewall **151/153** having an interior volume **158,** the surrounding sidewall **151/153** including first and second connectors **182/180;** disposing young plant material in the interior volume **158** to define a first filled crate **150;** providing a second filled crate **150;** and stacking the second filled crate **150** on top of the first filled crate **150** in a mated relationship.

### EXAMPLES

### Example 1 - Manufacture of Stackable Crates

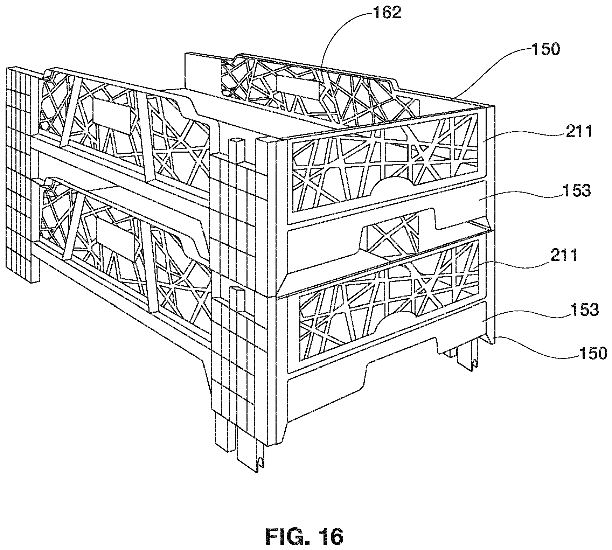

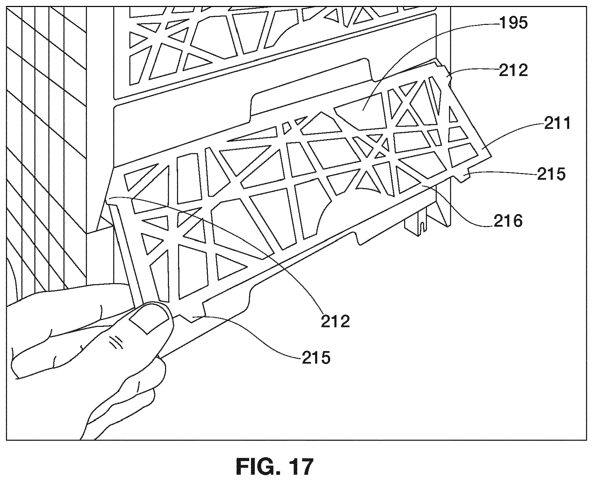

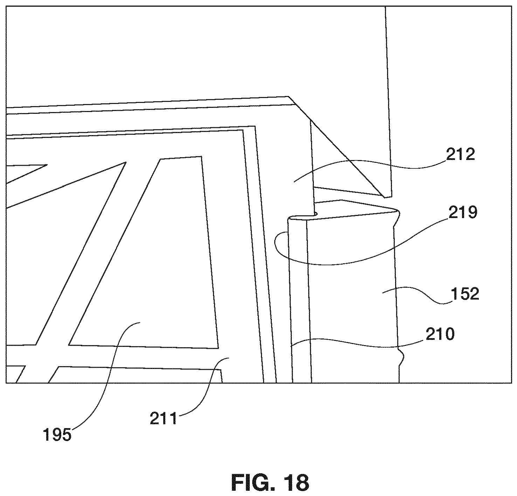

Stackable crates, similar to stackable crates **150** shown in FIGS. **1-20****,** were prepared. The stackable crates were used in combination to form ensembles containing two or more stackable crates. The stackable crates of the ensembles were filled with living plants and palletized on one or more pallets to transport the living plants from a first location to a second location. The stackable crates/ensembles protected the living plants during transportation.

It should be understood that although the above-described stackable crates, ensembles of stackable crates, and methods are described as "comprising" one or more components or steps, the above-described stackable crates, ensembles of stackable crates, and methods may "comprise," "consists of," or "consist essentially of" any of the above-described components, features or steps of the stackable crates, ensembles of stackable crates, and methods. Consequently, where the present invention, or a portion thereof, has been described with an open-ended term such as "comprising," it should be readily understood that (unless otherwise stated) the description of the present invention, or the portion thereof, should also be interpreted to describe the present invention, or a portion thereof, using the terms "consisting essentially of" or "consisting of" or variations thereof as discussed below.

As used herein, the terms "comprises," "comprising," "includes," "including," "has," "having," "contains", "containing," "characterized by" or any other variation thereof, are intended to encompass a non-exclusive inclusion, subject to any limitation explicitly indicated otherwise, of the recited components. For example, a crate, an ensemble, and/or method that "comprises" a list of elements (e.g., components, features or steps) is not necessarily limited to only those elements (or components or steps), but may include other elements (or components or steps) not expressly listed or inherent to the crate, ensemble, and/or method.

As used herein, the transitional phrases "consists of" and "consisting of" exclude any element, step, or component not specified. For example, "consists of" or "consisting of" used in a claim would limit the claim to the components, materials or steps specifically recited in the claim except for impurities ordinarily associated therewith (i.e., impurities within a given component). When the phrase "consists of" or "consisting of" appears in a clause of the body of a claim, rather than immediately following the preamble, the phrase "consists of" or "consisting of" limits only the elements (or components or steps) set forth in that clause; other elements (or components) are not excluded from the claim as a whole.

As used herein, the transitional phrases "consists essentially of" and "consisting essentially of" are used to define a crate, an ensemble, and/or method that includes materials, steps, features, components, or elements, in addition to those literally disclosed, provided that these additional materials, steps, features, components, or elements do not materially affect the basic and novel characteristic(s) of the claimed invention. The term "consisting essentially of" occupies a middle ground between "comprising" and "consisting of".

Further, it should be understood that the herein-described stackable crates, ensembles of stackable crates, and methods may comprise, consist essentially of, or consist of any of the herein-described components and features, as shown in the figures with or without any feature(s) not shown in the figures. In other words, in some embodiments, the stackable crates, ensembles of stackable crates, and/or methods of the present invention do not have any additional features other than those shown in the figures, and such additional features, not shown in the figures, are specifically excluded from the stackable crates, ensembles of stackable crates, and/or methods. In other embodiments, the stackable crates, ensembles of stackable crates, and/or methods of the present invention do have one or more additional features that are not shown in the figures.

While the specification has been described in detail with respect to specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims and any equivalents thereto.

## Claims

1. A stackable crate (150) having an interior volume (158) for receiving at least one tray (1) containing living young plant material, said crate comprising:
a frame (152) extending around the interior volume (158) and having an upper frame portion along an upper boundary of said interior volume and a lower frame portion along a lower boundary of said interior volume;
a plurality of spaced apart first connector elements (182) located proximate to the lower frame portion; and
a plurality of spaced apart second connector elements (180) located proximate to the upper frame portion;
wherein each one of said second connector elements (180) is sized and adapted to engage with one of said first connector elements (182) of a similarly constructed crate,
wherein said frame comprises (i) two opposing side walls (151 and 151') on either side of said interior volume, and (ii) two end walls (153 and 153') on either end of said interior volume, **characterized in that** at least one of said end walls comprises a wall passageway (176) formed therethrough so as to be in communication with the interior volume (158), said wall passageway being sized and adapted to facilitate placement and removal of a propagation tray within said interior volume,
wherein said frame (152) further comprises at least one movable door (211) within at least one door opening (210) positioned within at least one side wall (151 or 151') or end wall (153 or 153') of said frame, said at least one movable door being movable from a closed position that limits access to said interior volume to an open position that provides access to said interior volume (158).

2. A stackable crate according to claim 1, wherein said plurality of spaced apart first connector elements (182) comprises two or more first connector elements (182), and said plurality of spaced apart second connector elements (180) comprises two or more second connector elements (180).

3. A stackable crate according to any one of claims 1 to 2, comprising:
four first connector elements (182) each located proximate to a respective corner of said frame and extending downwardly from said lower frame portion to terminate in a pair of connecting feet (186); and
four second connector elements (180) each located proximate to a respective corner of said frame and formed in the upper frame portion, each second connector element comprising a pair of receiving recesses (184) sized and adapted to receive a pair of said connecting feet (186) of a similarly constructed crate in a nested state such that the upper crate is supported by the lower crate.

4. A stackable crate according to claim 3, wherein each receiving recess (184) comprises (i) three recess side wall surfaces and (ii) a recess bottom surface sized and shaped so as to receive a connecting foot comprising (i) three matching foot side wall surfaces and (ii) a matching foot bottom surface.

5. A stackable crate according to any one of claims 1 to 4, wherein said frame (152) comprises a flange (170) extending around at least a portion of the interior volume (158) of the crate at a location proximate to the lower frame portion and adapted to support a propagation tray thereon, wherein said flange is sized so that a propagation tray placed thereon rests along said flange with a portion of the propagation tray extending below said flange.

6. A stackable crate according to any one of claims 1 to 4, wherein a portion of said frame (152) comprises a bottom wall (193) extending along the interior volume of the crate at a location proximate to the lower frame portion and adapted to support a propagation tray thereon, wherein said bottom wall is sized so that a propagation tray placed thereon rests along said bottom wall with all of the propagation tray being above said bottom wall.

7. A stackable crate (150) according to any one of claims 3 and 4, wherein said frame (152) comprises an upper rim (162) extending along said upper frame portion, and at least a portion of said upper rim extends (i) above uppermost recess wall portions of said recesses, and (ii) along opposing side walls of said frame.

8. A stackable crate (150) according to claim 7, wherein said portion of said upper rim (162) comprises a first upper rim portion (163) and a second upper rim portion(165), said first and second upper rim portions forming a first angle therebetween, wherein said angle ranges between about 90° to less than 180°.

9. A stackable crate (150) according to any one of claims 1 to 8, wherein said frame (152) comprises a lower rim (166) extending along said lower frame portion, at least a portion of which extends below (a) a lowermost portion of a flange positioned along a lower portion of said interior volume, (b) a lowermost bottom wall portion of a bottom wall positioned along a lower portion of said interior volume, or (c) both (a) and (b), wherein said lower rim comprises a first lower rim portion (171) and a second lower rim portion (169), said first and second lower rim portions forming a second angle therebetween, wherein said angle ranges between about 90° to less than 180°.

10. A stackable crate (150) according to claim 1, wherein said at least one movable door (211) comprises opposing flap portions (212) extending outward from and along opposite side edges of said movable door and comprises door engaging members extending outward from and along a bottom edge of said movable door.

11. A stackable crate (150) according to any one of claims 1 to 10, wherein each door opening (210) comprises door opening engaging slots (219) extending inward and along opposing side edges of said door opening, said door opening engaging slots being sized to accept engagement with flap portions of said movable door and, wherein each of said door opening engaging slots extends from an upper edge of said door opening and along a side edge of said door opening.

12. A stackable crate (150) according to claim 11, wherein said frame further comprises opposing cut-out sections (223) positioned along each door opening so as to expose opposing portions of said door opening engaging slots (219), said opposing cut-out sections assisting in removal of a removable door from said stackable crate when another similarly stackable crate is positioned on said stackable crate, wherein each of said opposing cut-out sections extends from an upper edge of said door opening and along a side edge of said door opening a distance that is about equal to or greater than a flap portion length of each flap portion positioned along said movable door.

13. An ensemble of stackable crates (150) for transporting young living plants between a sender location and a recipient location, said ensemble comprising two or more stackable crates according to any one of claims 1 to 12, and further comprising a propagation tray (1) containing living young plants having a top tray portion and a bottom tray portion and being stackable along with said stackable crates such that (1) the bottom tray portion is adapted to be received on top of a stackable crate ; and (2) the top tray portion is adapted to receive and support a stackable crate thereabove.

## Patentansprüche

1. Stapelbare Steige (150) mit einem Innenvolumen (158) zur Aufnahme von mindestens einer Platte (1), die lebendes Jungpflanzenmaterial enthält, wobei die Steige Folgendes umfasst:
einen Rahmen (152), der sich um das Innenvolumen (158) herum erstreckt und einen oberen Rahmenabschnitt entlang einer oberen Begrenzung des Innenvolumens und einen unteren Rahmenabschnitt entlang einer unteren Begrenzung des Innenvolumens hat,
eine Vielzahl von beabstandeten ersten Verbinderelementen (182), die in der Nähe des unteren Rahmenabschnitts angeordnet sind, und
eine Vielzahl von beabstandeten zweiten Verbinderelementen (180), die in der Nähe des oberen Rahmenabschnitts angeordnet sind,
wobei jedes der zweiten Verbinderelemente (180) so bemessen und geeignet ist, um mit einem der ersten Verbinderelemente (182) einer ähnlich aufgebauten Steige in Eingriff zu kommen,
wobei der Rahmen (i) zwei gegenüberliegende Seitenwände (151 und 151') zu beiden Seiten des Innenvolumens und (ii) zwei Endwände (153 und 153') an beiden Enden des Innenvolumens umfasst, **dadurch gekennzeichnet, dass** mindestens eine der Endwände einen dort hindurch gebildeten Wanddurchgang (176) umfasst, um die Verbindung zu dem Innenvolumen (158) herzustellen, wobei der Wanddurchgang so bemessen und geeignet ist, um das Platzieren und Entfernen einer Anzuchtplatte in dem Innenvolumen zu erleichtern,
wobei der Rahmen (152) ferner mindestens eine bewegbare Tür (211) in mindestens einer Türöffnung (210) umfasst, die in mindestens einer Seitenwand (151 oder 151') oder Endwand (153 oder 153') des Rahmens positioniert ist, wobei die mindestens eine bewegbare Tür aus einer geschlossenen Position, die Zugang zu dem Innenvolumen begrenzt, in eine offene Position, die Zugang zu dem Innenvolumen (158) gewährt, bewegbar ist.

2. Stapelbare Steige nach Anspruch 1, wobei die Vielzahl von beabstandeten ersten Verbinderelementen (182) zwei oder mehr erste Verbinderelemente (182) umfasst und die Vielzahl von beabstandeten zweiten Verbinderelementen (180) zwei oder mehr zweite Verbinderelemente (180) umfasst.

3. Stapelbare Steige nach einem der Ansprüche 1 bis 2, umfassend:
vier erste Verbinderelemente (182), die jeweils in der Nähe einer jeweiligen Ecke des Rahmens angeordnet sind und sich von dem unteren Rahmenabschnitt nach unten erstrecken und in einem Paar Verbindungsfüße (186) enden, und
vier zweite Verbinderelemente (180), die jeweils in der Nähe einer jeweiligen Ecke des Rahmens angeordnet sind und im oberen Rahmenabschnitt gebildet sind, wobei jedes zweite Verbinderelement ein Paar Aufnahmeaussparungen (184) umfasst, das so bemessen und geeignet ist, um ein Paar der Verbindungsfüße (186) einer ähnlich konstruierten Steige in einem eingeschachtelten Zustand aufzunehmen, so dass die obere Steige von der unteren Steige gestützt wird.

4. Stapelbare Steige nach Anspruch 3, wobei jede Aufnahmeaussparung (184) (i) drei Aussparungsseitenwandflächen und (ii) eine Aussparungsbodenfläche umfasst, die so bemessen und gestaltet sind, dass sie einen Verbindungsfuß aufnehmen, der (i) drei passende Fußseitenwandflächen und (ii) eine passende Fußbodenfläche umfasst.

5. Stapelbare Steige nach einem der Ansprüche 1 bis 4, wobei der Rahmen (152) einen Flansch (170) umfasst, der sich an einer Stelle in der Nähe des unteren Rahmenabschnitts um mindestens einen Abschnitt des Innenvolumens (158) der Steige herum erstreckt und geeignet ist, eine Anzuchtplatte darauf zu stützen, wobei der Flansch so bemessen ist, dass eine darauf platzierte Anzuchtplatte entlang dem Flansch ruht, wobei sich ein Abschnitt der Anzuchtplatte unter den Flansch erstreckt.

6. Stapelbare Steige nach einem der Ansprüche 1 bis 4, wobei ein Abschnitt des Rahmens (152) eine Bodenwand (193) umfasst, die sich an einer Stelle in der Nähe des unteren Rahmenabschnitts entlang dem Innenvolumen erstreckt und geeignet ist, eine Anzuchtplatte darauf zu stützen, wobei die Bodenwand so bemessen ist, dass eine darauf platzierte Anzuchtplatte entlang der Bodenwand ruht, wobei sich die gesamte Anzuchtplatte oberhalb der Bodenwand erstreckt.

7. Stapelbare Steige (150) nach einem der Ansprüche 3 und 4, wobei der Rahmen (152) einen oberen Rand (162) umfasst, der sich entlang dem oberen Rahmenabschnitt erstreckt, und sich mindestens ein Abschnitt des oberen Rands (i) oberhalb den obersten Aussparungswandabschnitten der Aussparungen und (ii) entlang gegenüberliegenden Seitenwänden des Rahmens erstreckt.

8. Stapelbare Steige (150) nach Anspruch 7, wobei der Abschnitt des oberen Rands (162) einen ersten oberen Randabschnitt (163) und einen zweiten oberen Randabschnitt (165) umfasst, wobei der erste und der zweite obere Randabschnitt einen ersten Winkel zwischen sich bilden, wobei der Winkel zwischen ungefähr 90° und weniger als 180° beträgt.

9. Stapelbare Steige (150) nach einem der Ansprüche 1 bis 8, wobei der Rahmen (152) einen unteren Rand (166) umfasst, der sich entlang dem unteren Rahmenabschnitt erstreckt und von dem sich mindestens ein Abschnitt unter (a) einen untersten Abschnitt eines entlang einem unteren Abschnitt des Innenvolumens positionierten Flanschs, (b) einen untersten Bodenwandabschnitt einer Bodenwand, der entlang einem unteren Abschnitt des Innenvolumens positioniert ist, oder (c) sowohl (a) als auch (b) erstreckt, wobei der untere Rand einen ersten unteren Randabschnitt (171) und einen zweiten unteren Randabschnitt (169) umfasst, wobei der erste und der zweite untere Randabschnitt einen zweiten Winkel zwischen sich bilden, wobei der Winkel zwischen ungefähr 90° und weniger als 180° beträgt.

10. Stapelbare Steige (150) nach Anspruch 1, wobei die mindestens eine bewegbare Tür (211) gegenüberliegende Klappenabschnitte (212) umfasst, die sich von und entlang gegenüberliegenden Seitenrändern der bewegbaren Tür nach außen erstrecken, und Türeingriffsglieder umfasst, die sich von und entlang einem Bodenrand der bewegbaren Tür nach außen erstrecken.

11. Stapelbare Steige (150) nach einem der Ansprüche 1 bis 10, wobei jede Türöffnung (210) Türöffnungseingriffsschlitze (219) umfasst, die sich nach innen und entlang gegenüberliegenden Seitenrändern der Türöffnung erstrecken, wobei die Türöffnungseingriffsschlitze so bemessen sind, dass sie den Eingriff mit Klappenabschnitten der bewegbaren Tür akzeptieren, und wobei sich jeder der Türöffnungseingriffsschlitze von einem oberen Rand der Türöffnung und entlang einem Seitenrand der Türöffnung erstreckt.

12. Stapelbare Steige (150) nach Anspruch 11, wobei der Rahmen ferner gegenüberliegende Ausschnittsabschnitte (223) umfasst, die entlang jeder Türöffnung positioniert sind, um gegenüberliegende Abschnitte der Türöffnungseingriffsschlitze (219) freizulegen, wobei die gegenüberliegenden Ausschnittsabschnitte zum Entfernen einer entfernbaren Tür aus der stapelbaren Steige beitragen, wenn eine andere ähnlich stapelbare Steige auf der stapelbaren Steige positioniert wird, wobei sich jeder der gegenüberliegenden Ausschnittsabschnitte von einem oberen Rand der Türöffnung und entlang einem Seitenrand der Türöffnung über eine Strecke erstreckt, die ungefähr gleich einer Klappenabschnittlänge jedes entlang der bewegbaren Tür positionierten Klappenabschnitts oder größer als diese ist.

13. Gruppe aus stapelbaren Steigen (150) zum Transportieren von lebenden Jungpflanzen von einem Senderort zu einem Empfängerort, wobei die Gruppe zwei oder mehr stapelbare Steigen nach einem der Ansprüche 1 bis 12 umfasst, und ferner umfassend eine lebende Jungpflanzen enthaltende Anzuchtplatte (1), die einen oberen Plattenabschnitt und einen unteren Plattenabschnitt hat und zusammen mit den stapelbaren Steigen stapelbar ist, so dass (1) der untere Plattenabschnitt zur Aufnahme auf einer stapelbaren Steige geeignet ist und (2) der obere Plattenabschnitt zur Aufnahme und Stützung einer stapelbaren Steige darüber geeignet ist.

## Revendications

1. Caisse à claire-voie empilable (150) dotée d'un volume intérieur (158) servant à recevoir au moins un bac (1) contenant de jeunes végétaux vivants, ladite caisse à claire-voie comportant :
un cadre (152) s'étendant autour du volume intérieur (158) et comprenant une partie supérieure de cadre le long d'une frontière supérieure dudit volume intérieur et une partie inférieure de cadre le long d'une frontière inférieure dudit volume intérieur ;
une pluralité de premiers éléments (182) de liaison espacés situés à proximité de la partie inférieure de cadre ; et
une pluralité de deuxièmes éléments (180) de liaison espacés situés à proximité de la partie supérieure de cadre ;
chacun desdits deuxièmes éléments (180) de liaison étant dimensionné et conçu pour coopérer avec un desdits premiers éléments (182) de liaison d'une caisse à claire-voie de construction similaire,
ledit cadre comportant (i) deux parois latérales opposées (151 et 151') de part et d'autre dudit volume intérieur, et (ii) deux parois (153 et 153') d'extrémités à chaque extrémité dudit volume intérieur, **caractérisées en ce qu'**au moins une desdites parois d'extrémités comporte un passage (176) de paroi formé à travers celle-ci de façon à être en communication avec le volume intérieur (158), ledit passage de paroi étant dimensionné et conçu pour faciliter la mise en place et le démontage d'un bac de multiplication à l'intérieur dudit volume intérieur,
ledit cadre (152) comportant en outre au moins une porte mobile (211) à l'intérieur d'au moins une ouverture (210) de porte positionnée à l'intérieur d'au moins une paroi latérale (151 ou 151') ou paroi d'extrémité (153 ou 153') dudit cadre, ladite ou lesdites portes mobiles pouvant être déplacées d'une position fermée qui limite l'accès audit volume intérieur à une position ouverte qui donne accès audit volume intérieur (158).

2. Caisse à claire-voie empilable selon la revendication 1, ladite pluralité de premiers éléments (182) de liaison espacés comportant au moins deux premiers éléments (182) de liaison, et ladite pluralité de deuxièmes éléments (180) de liaison espacés comportant au moins deux deuxièmes éléments (180) de liaison.

3. Caisse à claire-voie empilable selon l'une quelconque des revendications 1 à 2, comportant :
quatre premiers éléments (182) de liaison situés chacun à proximité d'un coin respectif dudit cadre et s'étendant vers le bas en partant de ladite partie inférieure de cadre pour se terminer en une paire de pieds (186) de liaison ; et
quatre deuxièmes éléments (180) de liaison situés chacun à proximité d'un coin respectif dudit cadre et formés dans la partie supérieure de cadre, chaque deuxième élément de liaison comportant une paire de évidements récepteurs (184) dimensionnés et conçus pour recevoir une paire desdits pieds (186) de liaison d'une caisse à claire-voie de construction similaire dans un état emboîté de telle façon que la caisse à claire-voie supérieure soit soutenue par la caisse à claire-voie inférieure.

4. Caisse à claire-voie empilable selon la revendication 3, chaque évidement récepteur (184) comportant (i) trois surfaces de parois latérales d'évidement et (ii) une surface de fond d'évidement dimensionnées et mises en forme de façon à recevoir un pied de liaison comportant (i) trois surfaces de parois latérales de pied correspondantes et (ii) une surface de dessous de pied correspondante.

5. Caisse à claire-voie empilable selon l'une quelconque des revendications 1 à 4, ledit cadre (152) comportant une joue (170) s'étendant autour d'au moins une partie du volume intérieur (158) de la caisse à claire-voie à un emplacement proche de la partie inférieure de cadre et conçue pour soutenir un bac de multiplication sur celle-ci, ladite joue étant dimensionnée de telle façon qu'un bac de multiplication placé sur celle-ci repose le long de ladite joue, une partie du bac de multiplication s'étendant au-dessous de ladite joue.

6. Caisse à claire-voie empilable selon l'une quelconque des revendications 1 à 4, une partie dudit cadre (152) comportant une paroi (193) de fond s'étendant le long du volume intérieur de la caisse à claire-voie à un emplacement proche de la partie inférieure de cadre et conçue pour soutenir un bac de multiplication sur celle-ci, ladite paroi de fond étant dimensionnée de telle façon qu'un bac de multiplication placé sur celle-ci repose le long de ladite paroi de fond, la totalité du bac de multiplication se trouvant au-dessus de ladite paroi de fond.

7. Caisse à claire-voie empilable (150) selon l'une quelconque des revendications 3 et 4, ledit cadre (152) comportant un rebord supérieur (162) s'étendant le long de ladite partie supérieure de cadre, et au moins une partie dudit rebord supérieur s'étendant (i) au-dessus de parties extrêmes supérieures de parois d'évidements desdits évidements, et (ii) le long de parois latérales opposées dudit cadre.

8. Caisse à claire-voie empilable (150) selon la revendication 7, ladite partie dudit rebord supérieur (162) comportant une première partie (163) de rebord supérieur et une deuxième partie (165) de rebord supérieur, lesdites première et deuxième parties de rebord supérieur formant entre elles un premier angle, ledit angle variant entre environ 90° et moins de 180°.

9. Caisse à claire-voie empilable (150) selon l'une quelconque des revendications 1 à 8, ledit cadre (152) comportant un rebord inférieur (166) s'étendant le long de ladite partie inférieure de cadre, dont au moins une partie s'étend au-dessous de (a) une partie extrême inférieure d'une joue positionnée le long de un partie inférieure dudit volume intérieur, (b) une partie extrême inférieure de paroi de fond d'une paroi de fond positionné le long d'une partie inférieure dudit volume intérieur, ou (c) à la fois (a) et (b), ledit rebord inférieur comportant une première partie (171) de rebord inférieur et une deuxième partie (169) de rebord inférieur, lesdites première et deuxième parties de rebord inférieur formant entre elles un deuxième angle, ledit angle variant entre environ 90° et moins de 180°.

10. Caisse à claire-voie empilable (150) selon la revendication 1, ladite ou lesdites portes mobiles (211) comportant des parties (212) de rabats opposées s'étendant vers l'extérieur à partir et le long de bords latéraux opposés de ladite porte mobile et comportant des organes d'interaction avec la porte s'étendant vers l'extérieur à partir et le long d'un bord inférieur de ladite porte mobile.

11. Caisse à claire-voie empilable (150) selon l'une quelconque des revendications 1 à 10, chaque ouverture (210) de porte comportant des rainures (219) d'interaction avec l'ouverture de porte s'étendant en-deçà et le long de bords latéraux opposés de ladite ouverture de porte, lesdites rainures d'interaction avec l'ouverture de porte étant dimensionnées pour admettre une interaction avec des parties de rabats de ladite porte mobile et, chacune desdites rainures d'interaction avec l'ouverture de porte s'étendant à partir d'un bord supérieur de ladite ouverture de porte et le long d'un bord latéral de ladite ouverture de porte.

12. Caisse à claire-voie empilable (150) selon la revendication 11, ledit cadre comportant en outre des sections (223) de découpes opposées positionnées le long de chaque ouverture de porte de façon à découvrir des parties opposées desdites rainures (219) d'interaction avec l'ouverture de porte, lesdites sections de découpes opposées aidant au démontage d'une porte amovible de ladite caisse à claire-voie empilable lorsqu'une autre caisse à claire-voie empilable de construction similaire est positionnée sur ladite caisse à claire-voie empilable, chacune desdites sections de découpes opposées s'étendant à partir d'un bord supérieur de ladite ouverture de porte et le long d'un bord latéral de ladite ouverture de porte sur une distance qui est approximativement égale ou supérieure à une longueur de partie de rabat de chaque partie de rabat positionnée le long de ladite porte mobile.

13. Ensemble de caisses à claire-voie empilables (150) destinées à transporter de jeunes végétaux vivants entre un lieu expéditeur et un lieu destinataire, ledit ensemble comportant au moins deux caisses à claire-voie empilables selon l'une quelconque des revendications 1 à 12, et comportant en outre un bac (1) de multiplication contenant de jeunes végétaux vivants, doté d'une partie supérieure de bac et d'une partie inférieure de bac et pouvant être empilé en conjonction avec lesdites caisses à claire-voie empilables, tel que (1) la partie inférieure de bac est conçue pour être reçue par-dessus une caisse à claire-voie empilable ; et (2) la partie supérieure de bac est conçue pour recevoir et soutenir une caisse à claire-voie empilable au-dessus de celle-ci.
